# EUROPEAN PATENT APPLICATION

(11) **EP 1 970 740 A2**
(43) Date of publication of application: **17.09.2008**
(21) Application number: 08001915.1
(22) Date of filing: 01.02.2008
(51) Int. Cl.: G02B 7/04, G02B 7/08, G02B 7/09, G02B 7/10

(54) **Lens barrel body in a box form**

(30) Priority: 14.03.2007 JP 2007065905
(71) Applicant: Fujinon Corporation, Saitama-shi, Saitama (JP)
(72) Inventor: Ozaki, Takao, Saitama-shi Saitama (JP); Nagata, Koichi, Saitama-shi Saitama (JP); Horio, Motohiko, Saitama-shi Saitma (JP)
(74) Representative: Klunker . Schmitt-Nilson . Hirsch

(57) **Abstract**

A lens device is provided and includes: a lens barrel body (11) in a box form opened in an upper surface thereof; a lid member attached to the upper surface of the lens barrel body; three fixing units (112A,112B,112C) that fix the lid member and the lens barrel body; and at least one engaging unit (116) that engages the lid member with the lens barrel body so as to prevent the lid member from separating from the lens barrel body.

## Description

### BACKGROUND OF THE INVENTION

### 1. Field of the Invention

The present invention relates to a lens device, and more particularly to a lens device to be provided on a portable imaging video apparatus.

### 2. Description of Related Art

The lens device, to be provided on an imaging video apparatus, has a plurality of imaging lenses and mechanisms for driving those at the inside of the lens barrel thereof. The lens barrel includes a lens barrel body opened in one side surface with respect to the optical axis and a lid member closing the opening of the lens barrel body (see JP-A-2002-116365, for example). Such a lens device is built up by arranging various component parts in the lens barrel body and then attaching a lid member to the opening of the lens barrel body.

In the meanwhile, in the lens device of JP-A-2002-116365, the lid member is fixed at four points onto the lens barrel body. Thus, there is a possibility that deformation occurs in the lens barrel body and lid member thus lowering the optical characteristics of the imaging lens supported on the lens barrel body.

### SUMMARY OF THE INVENITON

An object of an illustrative, non-limiting embodiment of the invention is to provide a lens device capable of preventing the occurrence of deformation in the lens barrel body and lid member and of obtaining high optical characteristics.

According to an aspect of the invention, there is provided a lens device including: a lens barrel body in a box form opened in an upper surface thereof; a lid member attached to the upper surface of the lens barrel body; three fixing units that fix the lid member and the lens barrel body; and at least one engaging unit that engages the lid member with the lens barrel body so as to prevent the lid member from separating from the lens barrel body.

According to the lens device, since fixing units are provided at three points to fix the lid member and the lens barrel body, the lid member can be fixed firmly on the lens barrel body and the lid member and the lens barrel body can be prevented from deforming.

Meanwhile, according to the lens device, since an engaging unit is provided at least at one point, the lid member can be prevented from separating from the lens barrel body even if the fixing unit for the lens barrel body and lid member is provided at three points. Therefore, even if the lens device suffers an impact such as falling, the lid member and the lens barrel body can be prevented from separating from each other, thus preventing the lens barrel body from deforming.

In the lens device, the fixing units may be provided in vicinities of three of four corners of the lid member, and the engaging unit may be provided in a vicinity of a remaining one of the four corners.

According to the lens device, the lid member can be prevented from being separated from the lens barrel body by means of the four corners.

In the lens device, suspension fixing units may be provided in an upper surface of the lid member, and the lens device may be suspended through the suspension fixing units. Sometimes, a gap easily occurs between the lid member and the lens barrel body due to an impact such as falling. However, this can be prevented according to the invention.

### BRIEF DESCRIPTION OF THE DRAWINGS

The features of the invention will appear more fully upon consideration of the exemplary embodiment of the invention, which are schematically set forth in the drawings, in which:
Fig. 1 is a side sectional view showing a lens device according to an exemplary embodiment of the invention;
Fig. 2 is a perspective view of a casing furnished with a vibration-proof lens;
Fig. 3 is a perspective view of the fig. 2 casing removed of an actuator;
Fig. 4 is a perspective view showing a lens device assembled with a lid member on the lens barrel body; and
Fig. 5 is a perspective view showing the lens barrel body and lid member in a separated state,
wherein some of reference numerals in the drawings are set forth below.

10: Lens device; 11: lens barrel body; 12: first lens group; 14: second lens group; 16: third lens group; 18: fourth lens group; 28: guide bars; 110: lid member; 112A - 112C: screw holes; 114: engagement opening; 116: engaging member; 118: projection; 120A - 120C: holes; 122: suspension fixing units; and 126A - 126C: screws.

### DETAILED DESCRIPTION OF THE EXEMPLARY EMBODIMENTS

Although the invention will be described below with reference to exemplary embodiments thereof, the following exemplary embodiments and modifications do not restrict the invention.

According to the invention, since the fixing units for the lens barrel body and lid member are provided at three points and the engaging unit for the lens barrel body and lid member is provided at least at one point, the lid member and the lens barrel body can be prevented from deforming. In addition, the lid member can be prevented from separating from the lens barrel body into forming a gap.

In accordance with the appended drawings, explanation will be now made on lens devices according to exemplary embodiments of the present invention.

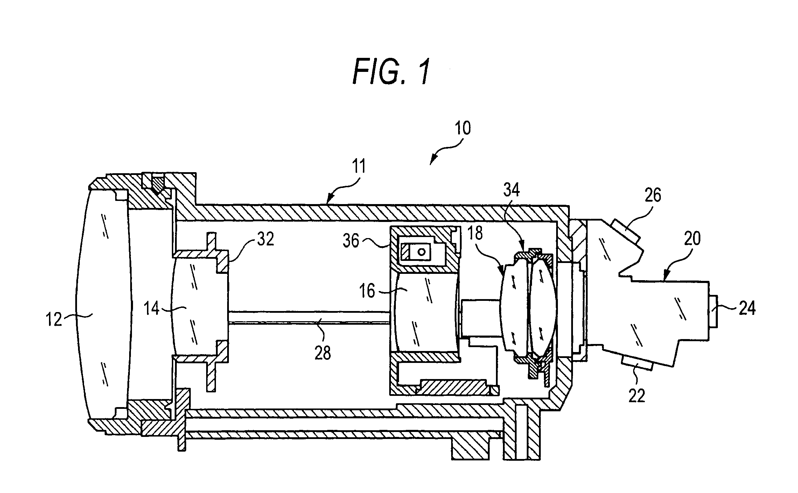

Fig. 1 shows a side sectional view of a lens device according to an exemplary embodiment of the present invention. The lens device 10 includes a first lens group 12, a second lens group 14, a third lens group 16 and a fourth lens group 18, in the order from the front (closer to a subject) to the rear (closer to an image) with respect to the imaging optical axis thereof. The subjective light, passed through the first to fourth lens groups 12 to 18, is focused, through a color separation prism 20 constituting a color-separation optical system, on imaging devices 22, 24, 26 provided at the R, G and B exit ends of the color separation prism 20. Incidentally, a camera body (not shown), to which the lens device 10 is attached, mounts thereon a signal processing circuit, etc. (not shown) that performs required processing (white balance, γ-correction, etc.) on the image signal obtained from the imaging devices 22, 24, 26 and produces a video signal in a form.

The first lens group 12 is so-called a front lens, and the second lens group 14 is a variator lens for changing the focal length. The third lens group 16 is a vibration-proof lens to be driven in a direction canceling the vibrations as caused by unintentional movement or so, and the fourth lens group 18 is a focus lens for focal adjustment.

The first to fourth lens groups 12 - 18 are held within a lens barrel body 11. Within the lens barrel body 11, one pair of guide bars 28 (one of those not shown) are arranged extending in parallel with the optical axis. On the one pair of guide bars 28, there are slidably supported a lens frame 32 of the second lens group 14 and a lens frame 34 of the fourth lens group 18. Furthermore, a casing 36 of the third lens group 16 is fixed on the one pair of guide bars 28. The casing 36 may be fixed directly on the lens barrel body 11.

The second lens group 14 is provided with a nut (not shown) structuring a screw feed device. To the nut, screw-coupled is a feed screw (not shown) structuring a screw feed device similarly. The feed screw is arranged in parallel with the optical axis, having an end coupled to the output shaft of a stepping motor (not shown) for zooming. The zooming stepping motor has a zoom driver circuit (not shown) so that when a zoom signal is outputted thereto from the camera body, the zooming stepping motor rotates the feed screw in a direction corresponding to the relevant signal. Due to this, the second lens group 14 is moved back and forth in the optical-axis direction along the one pair of guide bars 28, thus being adjusted at a desired focal length.

The fourth lens group 18 is similarly provided with a nut (not shown) structuring a screw feed device. To the nut, screwed is a feed screw (not shown) structuring a screw feed device similarly. The feed screw is arranged in parallel with the optical axis, having an end coupled to the output shaft of a focusing stepping motor (not shown). The focusing stepping motor has a focus driver circuit (not shown) so that, when a focus signal is outputted thereto from the camera body, the focusing stepping motor rotates the feed screw in a direction corresponding to the relevant signal. Due to this, the fourth lens group 18 is moved back and forth in the optical-axis direction along the one pair of guide bars 28, thus effecting focal adjustment.

Now, the structure of the vibration-proof mechanism will be explained.

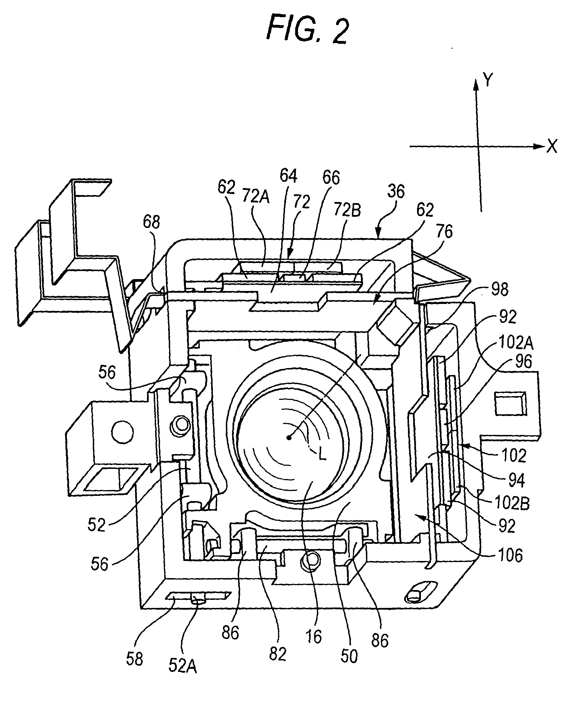

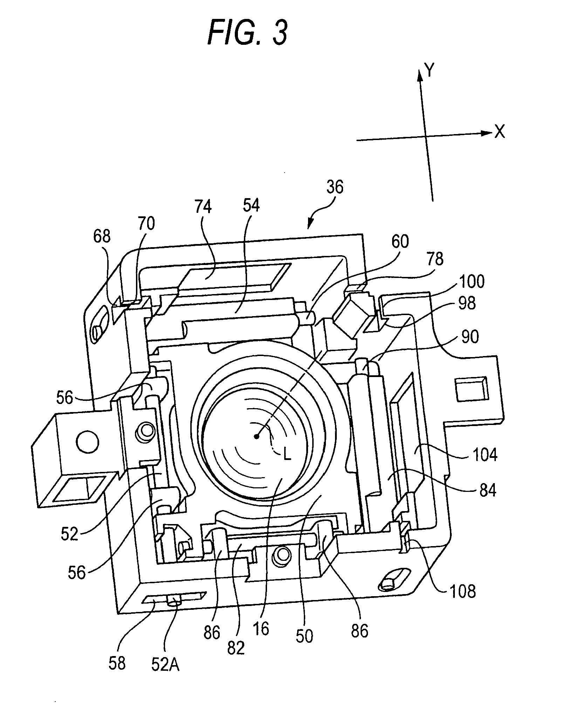

Fig. 2 is a perspective view of the casing 36 furnished with a vibration-proof lens 16 as viewed from rear, and Fig. 3 is a perspective view of the casing 36 shown in Fig. 2 removed of an actuator.

As shown in those figures, the third lens group (referred herein to as a vibration-proof lens for convenience sake) 16 is held in a lens frame 50. The lens frame 50 is supported to move in different two directions on a plane orthogonal to the photographic optical axis L. From now on, the moving directions of the vibration-proof lens 16 are taken as X (horizontal in Figs. 2 and 3) and Y (vertical in Figs. 2 and 3) directions. The mechanism for moving the vibration-proof lens 16 in the X direction is referred to as an X-moving mechanism while the mechanism for moving it in the Y direction is referred to as a Y-moving mechanism.

First, the X-moving mechanism will be explained.

A lens frame 50 is fixed with a moving guide bar 52. The moving guide bar 52 is arranged in the Y direction so that a slider 54 can be engaged with the moving guide bar 52. The slider 54 is formed in an L-form having upper and left side portions. On the left side portion, there are formed two guides 56, 56 protruding in the optical-axis. The guides 56 are respectively formed with guide holes (not shown) in the Y direction so that the moving guide bars 52 are passed through the guide holes. Due to this, the slider 54 is engaged over the moving guide bar 52 in a manner to slide in the Y direction. Accordingly, the lens frame 50 is supported to slide in the Y direction by means of the slider 54. The lens frame 50 is restricted from moving in the X direction so that, when the slider 54 is moved in the X direction, the lens frame 50 is also moved in the X direction.

Incidentally, the moving guide bar 52 has a lower end 52A, in the figure, in engagement with an elongate hole 58 formed in the X direction in the casing 36. This prevents the lens frame 50 from inclining (inclining relative to the optical axis).

A guide hole (not shown) is formed in the X direction in the upper side portion of the slider 54, so that a fixed guide bar 60 is passed through the guide hole. The fixed guide bar 60 is arranged in the X direction, the both ends of which are fixed to the casing 36. Due to this, the slider 54 is supported for sliding in the X direction along the fixed guide bar 60. Sliding the slider 54 in the X direction causes the lens frame 50, engaged with the left side portion of the slider 54 through moving guide bar 52, to slide in the X direction.

Meanwhile, a plate-like motor coil (product name: "Fine Pattern Coil" (Registered Trademark)) 62 is fixed on the upper side portion thereof. The motor coil 62 is bonded, at its underside, an output end of a flexible printed board 64. The motor coil 62 is arranged in the X direction, in a position around the outer periphery of the vibration-proof lens 16. The flexible printed board 64 is secured with a position sensor 66, such as a Hall element, through alignment.

The flexible printed board 64 is extended in the X direction from the motor coil 62 to the outside of the casing 36 through a side opening 68 of the casing 36. The flexible printed board 64, extended to the outside, is bent toward the outer. After a V-formed (or U-formed) bent portion is formed, it is extended from a predetermined position of the lens barrel body 11 (see Fig. 1) to the outside of the lens barrel body 11. The lead-out flexible printed board 64 is connected to a unit that takes control of supplying power and operating the vibration-proof lens 16. Incidentally, the side opening 68 of the casing 36 is in communication with the end surface of the casing 36 through a slit 70. By passing the flexible printed board 64 through the slit 70, the flexible printed board 64 is arranged to the inside of the side opening 68.

On the outer side of the motor coil 62, a magnet 72 is arranged opposed to the motor coil 62. The magnet 72 is formed in a rectangular plate form and arranged such that the S and N poles 72A, 72B are arranged in the X direction. The foregoing position sensor 66 is arranged opposite to the boundary of the S and N poles 72A, 72B of the magnet 72, to detect a change of magnet field. The detected signal is outputted to the unit through the flexible printed board 64.

A metal plate (not shown), to serve as a yoke, is provided on the outer side of the magnet 72. The metal plate is to be attracted toward the magnet 72 through the action of the magnetic force of the magnet 72. The metal plate is formed in a rectangular form greater than the magnet 72, and attached in the state that the edge thereof protrudes from the magnet 72. The casing 36 has an outer surface formed with a recess in a size equal to the metal plate, on the inner side of which is formed an opening 74 in a size equal to the magnet 72. The metal plate is received in the recess of the casing 36 while the magnet 72 is received in the opening 74.

On the inner side of the motor coil 62, a metal plate 76, to serve as a yoke, is arranged in the X direction and oppositely to the motor coil 62. The metal plate 76 has one end inserted in the slit 70 and the other end inserted in the groove 78 formed in the casing 36, thereby being fixed in the casing 36.

The X-moving mechanism, constructed as above, is arranged with the motor coil 62 in the magnetic field formed by the magnet 72 and two metal plates (one omitted in showing) 76. By energizing the motor coil 62, the motor coil 62 and the supporting slider 54 undergo a force in the X direction. Accordingly, the slider 54 and the lens frame 50 are moved in the X direction, thus moving the vibration-proof lens 16 in the X direction. The description made so far is on the vibration-proof mechanism.

Now, explanation will be made on the Y-moving mechanism.

The lens frame 50 is fixed with a moving guide bar 82. The moving guide bar 82 is arranged in the X direction so that a slider 84 can be engaged with the moving guide bar 82. The slider 84 is formed in an L-form having upper and left side portions. On the left side portion, there are formed two guides 86, 86 protruding in the optical-axis direction. The guides 86 are respectively formed with guide holes (not shown) in the X direction so that the moving guide bars 82 are passed through the guide holes. Due to this, the slider 84 is engaged over the moving guide bar 82 in a manner to slide in the X direction. Accordingly, the lens frame 50 is supported for sliding in the X direction by means of the slider 84. The lens frame 50 is restricted from moving in the Y direction so that, when the slider 54 is moved in the Y direction, the lens frame 50 is also moved in the Y direction.

A guide hole (not shown) is formed in the Y direction in the right side portion of the slider 84, so that a fixed guide bar 90 is passed through the guide hole. The fixed guide bar 90 is arranged in the Y direction, the both ends of which are fixed to the casing 36. Due to this, the slider 84 is supported for sliding in the Y direction along the fixed guide bar 90. Sliding the slider 84 in the Y direction causes the lens frame 50, engaged with the lower side portion of the slider 54 through moving guide bar 52, to slide in the X direction.

Meanwhile, a plate-like motor coil (product name: "Fine Pattern Coil" (Registered Trademark)) 92 is fixed on the right side portion of the slider 54. The motor coil 92 is bonded, at its left surface, an output end of a flexible printed board (hereinafter, referred to as "flexible printed board") 94. The motor coil 92 is arranged in the Y direction, in a position around the outer periphery of the vibration-proof lens 16. The flexible printed board 94 is secured with a position sensor 96, such as a Hall element, through alignment.

The flexible printed board 94 is extended in the Y direction from the motor coil 92 to the outside of the casing 36 through a side opening 98 of the casing 36. The flexible printed board 64, extended to the outside, is bent toward the outer. After a V-formed (or U-formed) bent portion is formed, it is extended from a predetermined position of the lens barrel body 11 (see Fig. 1) to the outside of the lens barrel body 11. The lead-out flexible printed board 94 is connected to the unit that takes control of supplying power and operating the vibration-proof lens 16. Incidentally, the side opening 98 of the casing 36 is in communication with the end surface of the casing 36 through a slit 100. By passing the flexible printed board 94 through the slit 100, the flexible printed board 94 is arranged to the inside of the side opening 98.

On the outer side of the motor coil 92, a magnet 102 is arranged opposed to the motor coil 92. The magnet 102 is formed in a rectangular plate form and arranged such that the S and N poles 102A, 102B are arranged in the Y direction. The foregoing position sensor 96 is arranged opposite to the boundary of the S and N poles 102A, 102B of the magnet 102, to detect a change of magnet field. The detected signal is outputted to the unit through the flexible printed board 94.

A metal plate (not shown), to serve as a yoke, is provided on the outer side of the magnet 102. The metal plate is to be attracted toward the magnet 102 through the action of the magnetic force of the magnet 102. The metal plate is formed in a rectangular form greater than the magnet 102, and attached in the state that the edge thereof protrudes from the magnet 72. The casing 36 has an outer surface formed with a recess in a size equal to the metal plate, on the inner side of which is formed an opening 104 in a size equal to the magnet 102. The metal plate is received in the recess of the casing 36 while the magnet 102 is received in the opening 104.

On the inner side of the motor coil 92, a metal plate 106, to serve as a yoke, is arranged in the Y direction and oppositely to the motor coil 92. The metal plate 106 has one end inserted in the slit 100 and the other end inserted in the groove 108 formed in the casing 36, thereby being fixed in the casing 36.

The Y-moving mechanism, constructed as above, is arranged with the motor coil 92 in the magnetic field formed by the magnet 102 and two metal plates (one omitted in showing) 106. By energizing the motor coil 92, the motor coil 92 and the supporting slider 84 undergo a force in the Y direction. Accordingly, the slider 84 and the lens frame 50 are moved in the Y direction, thus moving the vibration-proof lens 16 in the Y direction. The description made so far is on the vibration-proof mechanism.

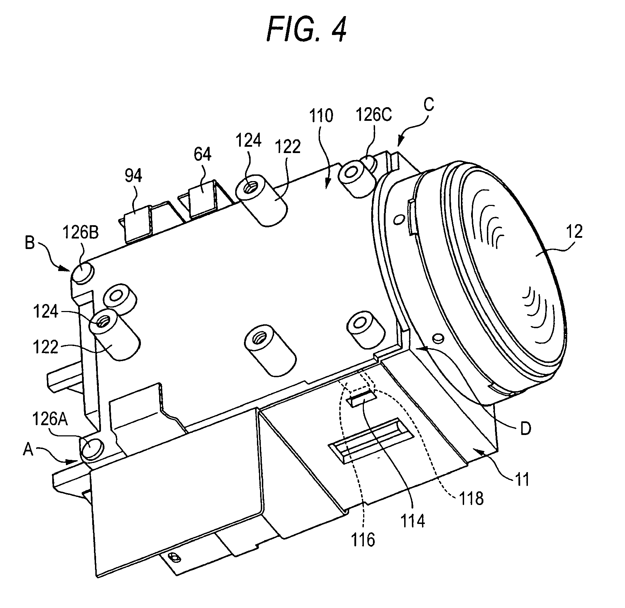

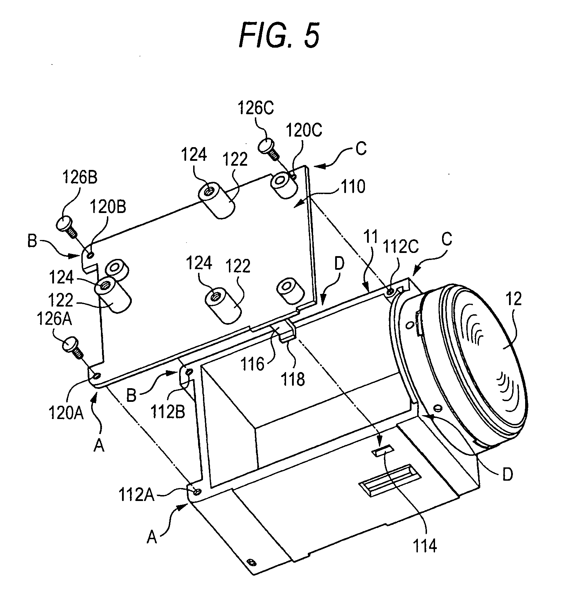

Now explanation is made on a fixing mechanism for the lens barrel body 11 and lid member 110 constituting a characterizing part of the invention. Fig. 4 is a perspective view showing the lens device 10 which the lid member 110 has been attached to the lens barrel body 11 while Fig. 5 is a perspective view showing a state that the lid member 110 is removed from the lens barrel body 11.

As shown in those figures, the lens barrel body 11 is formed in a box form opened in the upper surface thereof. In the lens barrel body 11, screw holes 112A, 112B, 112C are formed in the vicinities of three corners A, B, C out of the upper four corners A, B, C, D. In the side surface of the lens barrel body 11, an engagement opening 114 is formed in the vicinity of the corner D so that it can engage with a projection 118 of an engagement member 116, referred later.

Meanwhile, the lid member 110 is formed in the form of a rectangular plate so that the lid member 110 can close the upper aperture of the lens barrel body 11. Holes 120A, 120B, 120C are formed in the vicinities of the three corners A, B, C of the lid member 110. The holes 120A - 120C are formed in positions coincident with the screw holes 112A - 112C upon placing the lid member 110 on the upper aperture of the lens barrel body 11.

An engaging unit 116 is provided in the vicinity of the corner D of the lid member 110. The engaging unit 116 extends downwardly from the underside of the lid member 110. The engaging unit 116 has a lower end projecting toward the outside and forming a projection 118.

Three suspension fixing units 122 are provided in the upper surface of the lid member 110. The suspension fixing units 122 are formed protruding circularly cylindrically from the upper surface of the lid member 110. The suspension fixing units 122 has respective screw holes formed from above thereof. The lid member 110 can be suspended by a camera body through screws (not shown) tightened in the screw holes 124 with the suspension fixing units 122 abutted against the not-shown camera body.

The lid member 110, structured as above, is placed on the upper aperture of the lens barrel body 11 while engaging, from inner, the projection 118 of the engaging unit 116 with the engagement opening 114 of the lens barrel body 11. After matching the holes 120A - 120C of the lid member 110 with the screw holes 112A - 112C of the lens barrel body 11, the lid member 110 is fixed to the lens barrel body 11 by tightening up the screws 126A - 126C. This fixes the lid member 110 to the lens barrel body 11 at the three corners A - C.

In the case the lid member 110 is fixed at three points on the lens barrel body 11, firm fixing is available without encountering strains in the lid member 110 and lens barrel body 11. Namely, where the lid member 110 is fixed at the four corners A - D to the lens barrel body 11, strains are problematically caused in the lid member 110 and lens barrel body 11 due to the working accuracy such as of the lid member 110, thus resulting in lowered optical characteristics.

Contrary to this, in the embodiment, because the lens barrel body 11 and the lid members 110 are fixed at three points, the lid member 110 can be fixed to the lens barrel body 11 without causing strains in the lens barrel body 11 and lid member 110.

In the lens device of the embodiment, because the lens barrel body 11 is engaged with the lid member 110 in a position nearby the corner D, the lid member 110 and the lens barrel body 11 can be prevented from separating in the position of the corner D. Therefore, the lid member 110 can be prevented from separating from the lens barrel body 11 at all the corners A - D. This can prevent a gap from being formed between the lid member 110 and the lens barrel body 11 even where a fall down of the lens device 10. Therefore, the lens barrel body 11 can be prevented from deforming and hence from lowering in the optical characteristics of the lens barrel body 11.

Incidentally, although the embodiment arranged in the corners A - D the fixing means for the lens barrel body 11 and lid member 110 (i.e. screw holes 112A - 112C, hole 120A - 120C, screws 126A - 126C) and the engaging means for the lens barrel body 11 and lid member 110 (i.e. engaging unit 116 and engagement opening 114), the arrangement of the fixing means and engaging means is not limited to it. For example, fixing means may be provided in the vicinities of the corners A, B and in the vicinity of the intermediate point of the corners C, D.

This application claims foreign priority from Japanese Patent Application No. 2007-65905 filed March 14, 2007, the contents of which is herein incorporated by reference.

## Claims

1. A lens device comprising:
a lens barrel body in a box form opened in an upper surface thereof;
a lid member attached to the upper surface of the lens barrel body;
three fixing units that fix the lid member and the lens barrel body; and
at least one engaging unit that engages the lid member with the lens barrel body so as to prevent the lid member from separating from the lens barrel body.

2. The lens device according to claim 1, wherein the fixing units are disposed in vicinities of three of four corners of the lid member, and the engaging is disposed in a vicinity of a remaining one of the four corners.

3. The lens device according to claim 1, further comprising a suspension fixing unit in an upper surface of the lid member, wherein the lens device is suspended through the suspension fixing unit.

4. The lens device according to claim 2, further comprising a suspension fixing unit in an upper surface of the lid member, wherein the lens device is suspended through the suspension fixing unit.
